(19) Europäisches Patentamt
European Patent Office
Office européen des brevets

(11) EP 4 687 282 A1

(12) **EUROPEAN PATENT APPLICATION**

(43) Date of publication:
04.02.2026 Bulletin 2026/06

(21) Application number: 24192437.2

(22) Date of filing: 01.08.2024

(51) International Patent Classification (IPC):
$H02P\ 1/04^{(2006.01)}$    $H02P\ 1/46^{(2006.01)}$
$H02P\ 6/18^{(2016.01)}$    $H02P\ 6/21^{(2016.01)}$
$H02P\ 6/22^{(2006.01)}$    $H02P\ 21/24^{(2016.01)}$
$H02P\ 21/34^{(2016.01)}$

(52) Cooperative Patent Classification (CPC):
H02P 1/04; H02P 1/46; H02P 6/181; H02P 6/21;
H02P 6/22; H02P 21/24; H02P 21/34

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Borgwarner Inc.
Auburn Hills, Michigan 48326 (US)**

(72) Inventors:
• **Beeli, Nick
1806 St-Légier (CH)**
• **Linder, Andres
2564 Bellmund (CH)**
• **Gächter, Reto
3098 Köniz (CH)**
• **Schnegg, Sandro
2564 Bellmund (CH)**
• **Kunz-Zimmermann, Cyrille
2504 Biel (CH)**

(74) Representative: **Peterreins Schley
Patent- und Rechtsanwälte PartG mbB
Hermann-Sack-Straße 3
80331 München (DE)**

(54) **SENSORLESS MOTOR START**

(57) The present disclosure relates to a method for starting an AC electric motor comprising: applying, in response to receiving a control signal for starting the motor, a first active short profile to the motor during a first period of time; applying, after the first period of time, a first current profile to the motor during a second period of time; applying, after the second period of time, a second active short profile to the motor during a third period of time; optionally, applying, after the third period of time, a second current profile to the motor during a fourth period of time; applying, after the third period of time and/or after the fourth period of time, open-loop control of the motor based on a crank-up profile wherein a speed of the rotor of the motor is increased from essentially zero to a speed threshold during a fifth period of time.

Fig. 3a

## Description

## TECHNICAL FIELD

This specification relates to a method for starting an AC electric motor without rotor position sensor.

## BACKGROUND

Alternating current (AC) electric motors such as synchronous AC motors and/or reluctance motors are well-known in the art. The same applies to inverters with vector control (also known as field-oriented control, FOC) and space vector modulation.

Furthermore, motors without rotor position sensor are known where the rotor position (and/or rotor speed) is estimated and fed into vector control. However, such estimates are only reliable above a given speed threshold. Motor control above this speed threshold can be referred to as sensorless closed-loop. Below the speed threshold - in the absence of a reliable position and/or speed signal that could be fed into vector control - a proxy position and/or speed signal is fed into vector control. This can be referred to as sensorless open-loop. In general, given that the proxy position and/or speed signal is somewhat arbitrary starting a motor sensorless is challenging, if not problematic.

In particular, for sensorless applications with synchronous machines and little or no reluctance, it can be challenging to use high-frequency injection to measure the rotor position. This involves applying a rotating magnetic field to force the rotor to rotate in order to achieve a minimum speed that allows sensorless operation with an algorithm based on induced voltage. However, the problem is that upon applying a magnetic field in order to start (and/or to block) the rotation, the rotor tends to turn in the wrong direction for a short time due to the, in general, wrong initial position, which does not match with the stationary vector (e.g. in the $I_q/I_d$ frame). The large mass inertia in combination with the undamped system typically leads to overshooting of the rotor when aligned with a stationary vector. As soon as the rotor overshoots, the sign of the direction of force changes, which inevitably leads to undesired oscillations.

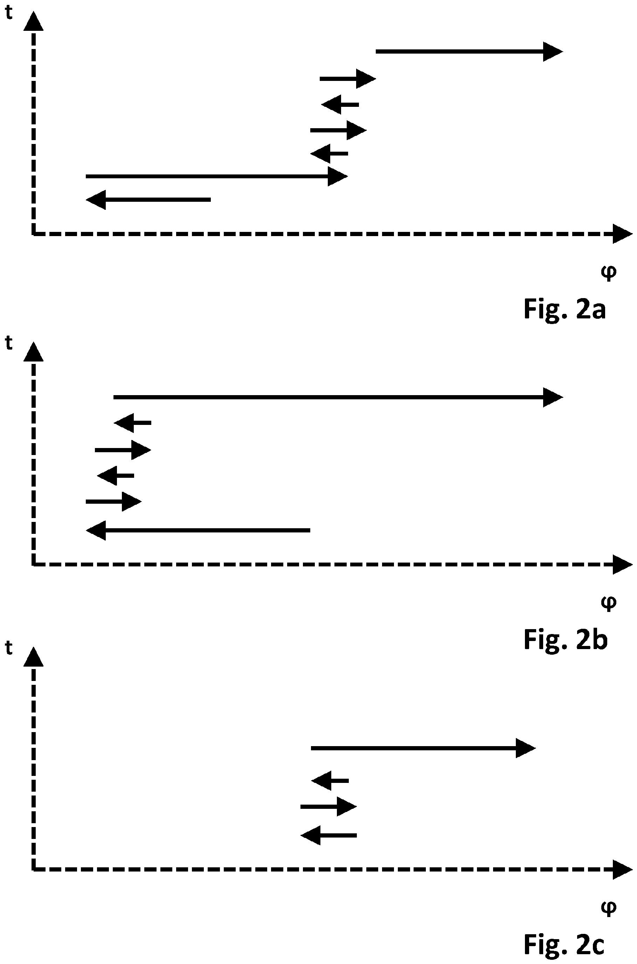

For application with fans, this may imply an error "blocked motor" or, in a more favorable case, a much longer engagement time (from zero to the idle speed). Especially in applications with fans, the rotor may always be in motion due to the outside wind interacting with the impeller of the fan. If the rotor speed is below the speed threshold, a sensorless start is sometimes not possible. This implies an open loop start and also means that the rotor is immobilized. As a result, the oscillation effect can be amplified. Typical such oscillations sketching filmed motor tests during motor start are visualized in **Fig.** 2a-b.

A technical problem to be solved in this disclosure can thus be seen in providing means for starting an AC electric motor without a rotor position sensor, in particular, such a motor driving a fan, in a well-behaved manner, thereby reducing oscillations and proportions of time where the rotor turns opposite to the desired direction.

## SUMMARY

According to a first aspect, there is disclosed a computer-implemented method for starting an AC electric motor. The method may comprise receiving a control signal for starting the motor. The method further comprises applying, e.g. in response to receiving the control signal for starting the motor, a first active short profile to the motor during a first period of time. The method further comprises applying, after the first period of time, a first current profile to the motor during a second period of time. The method further comprises applying, after the second period of time, a second active short profile to the motor during a third period of time. The method may comprise applying, after the third period of time, a second current profile to the motor during a fourth period of time. The method may further comprise applying, after the third period of time and/or after the fourth period of time, open-loop control of the motor based on a crank-up profile wherein a speed of the rotor of the motor is increased from essentially zero to a speed threshold during a fifth period of time.

According to a second aspect, there is disclosed an inverter for driving an AC electric motor. The inverter comprises three or more lower switches, each connecting one potential of a DC supply to a respective phase of the motor. The inverter further comprises three or more upper switches, each connecting another potential of the DC supply to a respective phase of the motor. The inverter comprises further a computer system configured to execute the computer-implemented method for starting the motor according to the first aspect (or an embodiment thereof), thereby actuating the three or more lower and upper switches.

According to a third aspect, there is disclosed a motor system comprising the inverter of the second aspect (or an embodiment thereof) and the motor.

According to a fourth aspect, there is disclosed a fan comprising the motor system of the third aspect (or an embodiment thereof) and an impeller mechanically connected to a rotor of the motor.

According to a fifth aspect, there is disclosed a computer program or signal configured to execute the computer-implemented method for starting the motor according to the first aspect (or an embodiment thereof).

According to a sixth aspect, there is disclosed a computer-readable medium storing the computer program or the signal according to the fifth aspect.

The principle of the method of the first aspect (or an embodiment thereof) is to apply a fixed magnetic field (at a desired initial position) for a very short time (t_m), followed by an active short circuit (ASC) on the three phases for a very short time (t_asc) to generate additional damping in the system. If the rotor is incorrectly positioned, it will start to rotate, but as (t_m) is not long and is followed by an ASC, the rotor will stop quickly. This sequence is repeated at least two times. The times (t_m) during which the fixed magnetic field is applied may gradually increase. At the end of the sequences, the desired initial position is reached correctly without noticeable oscillations and, subsequently, an open-loop motor start can be applied (e.g. until the transition to closed-loop control).

Thanks to the method of the first aspect (or an embodiment thereof), a well-behaved (e.g. a clean and/or problem-free) start of a motor without rotor position sensor can be guaranteed in almost all cases. Not requiring a rotor position sensor is advantageous in terms of costs and system reliability. In particular, situations where the motor ends up in an error state during a start attempt are reduced or eliminated. Furthermore, the engagement time (e.g. from zero to an idle speed) is reduced.

It was found that the method of the first aspect (or an embodiment thereof) is quite effective in guaranteeing a well-behaved motor start for varying start conditions (e.g. initial rotor speed). Beneficially, before start-up it is not necessary to monitor whether or not the rotor is rotating or where the rotor angle is located. Furthermore, during start-up it is not necessary to monitor whether or not the rotor is rotating in the desired direction. During start-up it is also not necessary to monitor whether or not the rotor is oscillating (i.e. undesired rapid changes of direction).

In particular, the method of the first aspect (or an embodiment thereof) was found to be effective in addressing problems in one or more of the following circumstances:

- applications with high inertia;

- permanent synchronous motor without or with small reluctance;

- start-up the open-loop algorithm when the rotor is already rotating (e.g. because it is windy), regardless of the typically unknown initial direction of rotation;

- applications with fans and constant wind creating a small permanent rotation; and/or

- applications with small external forces on the shaft.

In tests beneficial effects of the method of the first aspect (or an embodiment thereof) were found to be one or more of:

- oscillation problems (even start-up errors) can be reduced or even avoided;

- the rotor can be stabilized at a desired position;

- the motor can be stabilized even in the event of external wind on the fan;

- sensorless control can be maintained, a rotor position sensor and cabling are not needed which not only saves money in production but also increases reliability (one device less and corresponding cabling each of which may fail);

- fast start-up (compared with conventional stabilization methods).

The method of the first aspect (or an embodiment thereof) reduces production costs (e.g. no encoder and corresponding cabling). Furthermore, the method enables a fan to be started when it is windy, but the speed remains low. Furthermore, the method makes it possible to start the fan when inertia is high. Furthermore, the method increases the long-term reliability of the product (fewer useful components such as e.g. an encoder). Furthermore, the method reduces system design time (for fan and motor). Furthermore, the method reduces the possible external interferences (less cabling).

## FIGURE DESCRIPTION

**Fig. 1** schematically illustrates a fan comprising a motor system with a motor and a two-level, three-phase inverter.

**Fig. 2a-b** schematically illustrate the change of rotor position of the motor over time showing start problems of the motor/impeller in a conventional sensorless start method.

**Fig. 2c** schematically illustrates a decent motor/impeller start in an embodiment of the claimed method.

**Fig. 3a** illustrates an example of the claimed method in terms of time curves of motor speed, motor current and active short profiles.

**Fig. 3b** illustrates an example of the claimed method with an alternating succession with arbitrary integer n in terms of time curves of motor speed, motor current and active short profiles.

**Fig. 3c** illustrates an example of the claimed method with an alternating succession with n=3.

**Fig. 4a** illustrates embodiments of the claimed method.

**Fig. 4b** illustrates embodiments of the claimed method with an alternating succession with arbitrary integer n.

**Fig. 5** schematically illustrates differences in the time for stabilization in either a conventional motor start-up or a motor start-up as of the claimed method each starting from varying initial actual rotor positions.

## DETAILED DESCRIPTION

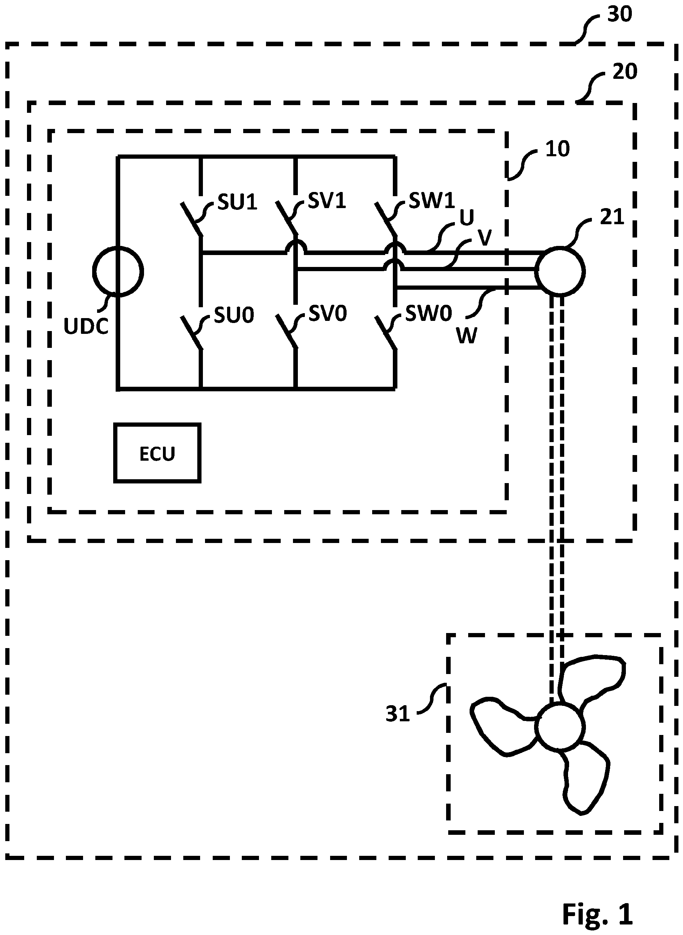

There is disclosed a computer-implemented method 100 for starting an AC (i.e. alternating current) electric motor 21. The AC electric motor 21 (abbreviated as motor) is a motor driven by an alternating current. The AC electric motor 21 can be a synchronous motor. In this case, at steady state, the rotation of the rotor is synchronized with the frequency of the supply current (or, equivalently, the stator magnetic field). The synchronous motor may or may not have a reluctance. Alternatively, or in addition, the AC electric motor 21 may be a reluctance motor. A reluctance motor is a motor that induces non-permanent magnetic poles on a ferromagnetic rotor. While the rotor does not have any windings, it generates torque through magnetic reluctance. The alternating current can be provided electronically from a direct current (DC) supply UDC (e.g. from a battery) by an inverter 10. The motor 21 may be a three-phase motor having phases, say, U, V, W. Such a motor and a corresponding inverter 10 are schematically illustrated in **Fig. 1.** However, the method may apply to any number of phases.

As discussed, the method 100 is directed at starting the motor without a rotor position sensor in a well-behaved manner, i.e. so as to reduce oscillations and proportions of time where the rotor turns opposite to the desired direction as much as possible.

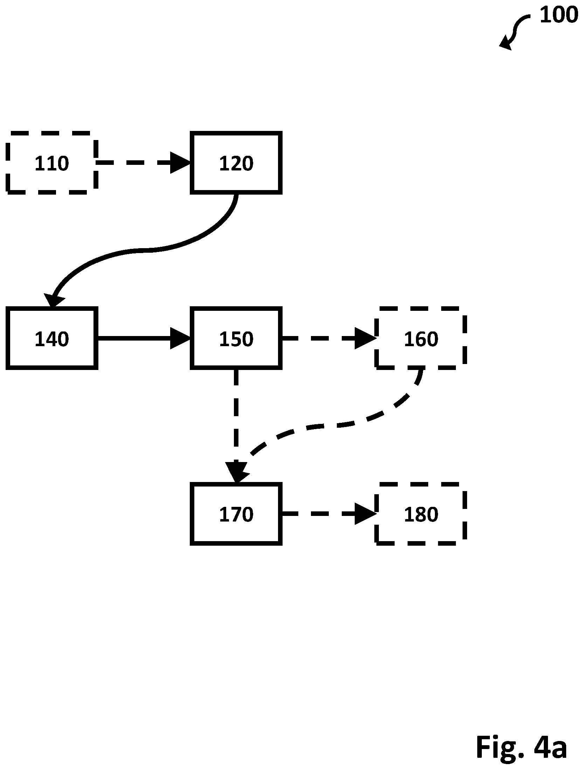

As schematically illustrated as an option in **Fig. 4a-b,** the method 100 may comprise receiving 110 a control signal for starting the motor.

As schematically illustrated in **Fig. 4a-b,** the method 100 comprises applying 120, e.g. in response to receiving the control signal for starting the motor 21 or to being supplied by power, a first active short profile A1 to the motor 21 during a first period of time T1.

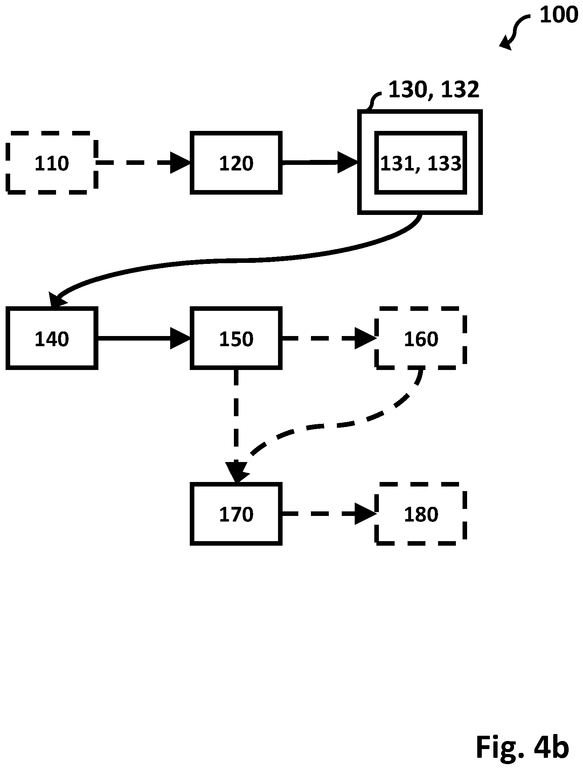

As schematically illustrated in **Fig. 4a-b,** the method 100 further comprises applying 140, after the first period of time T1, a first current profile I1 to the motor 21 during a second period of time T2. Step 140 does not necessarily have to be right after step 120. In fact, in some embodiments, see e.g. **Fig. 4b,** step 140 is not right after step 120. On the other hand, step 140 may be right after step 120.

As schematically illustrated in **Fig. 4a-b,** the method 100 further comprises applying 150, after the second period of time T2, a second active short profile A2 to the motor 21 during a third period of time T3. Step 150 does not necessarily have to be right after step 140. On the other hand, step 150 may be right after step 140.

As schematically illustrated as an option in **Fig. 4a-b,** the method 100 may comprise applying 160, after the third period of time T3, a second current profile I2 to the motor 21 during a fourth period of time T4. In other words, step 160 may or may not be present. If step 160 is present, it does not necessarily have to be right after step 150. On the other hand, step 160 may be right after step 150.

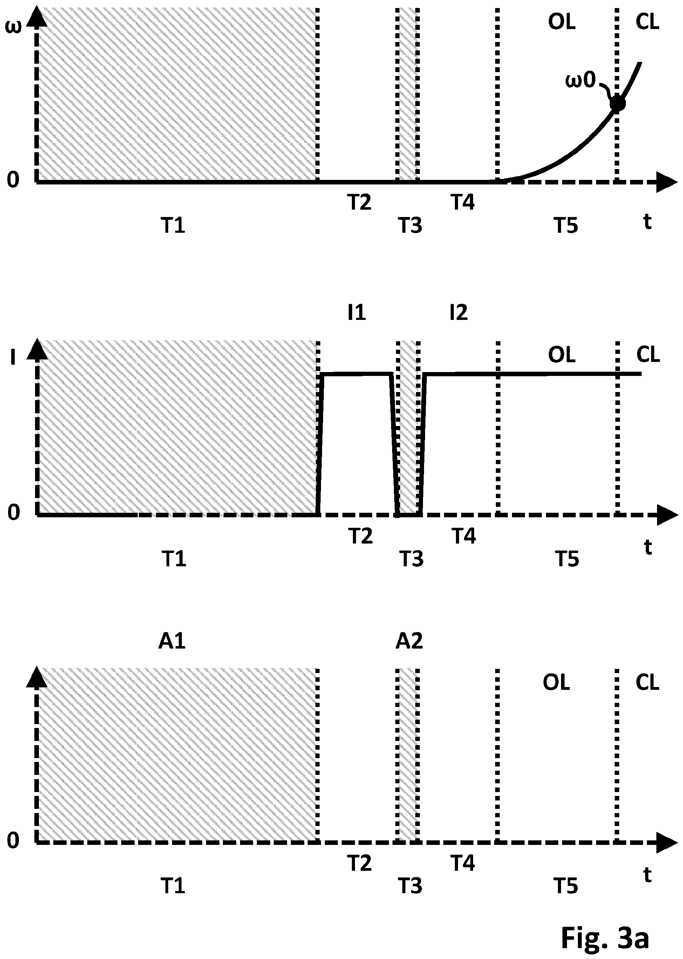

As schematically illustrated in **Fig. 4a-b,** the method 100 further comprises applying 170, after the third period of time T3 and/or after the fourth period of time T4 (in case step 160 is present), open-loop control OL of the motor 21 based on a crank-up profile wherein a speed of the rotor of the motor 21 is increased from essentially zero to a speed threshold $\omega 0$ during a fifth period of time T5 (as e.g. illustrated in **Fig. 3a-c**). Step 170 does not necessarily have to be right after any of the steps 150 or 160. On the other hand, step 170 may be right after step 150 or step 170 may be right after step 160 (if present). The increase of the speed from essentially zero may comprise an increase from a non-zero speed, as long as the absolute value of this non-zero speed is sufficiently small. For example, this non-zero speed is sufficiently small, when its absolute value is $\leq 20$ rpm, $\leq 10$ rpm, $\leq 5$ rpm, $\leq 1$ rpm, or $\leq 0.1$ rpm. A threshold value of this kind for the criterion "essentially zero" may be application-specific. For example, it may be defined relative to the maximum speed of the motor, e.g. $\leq 5\%$ max speed, $\leq 1\%$ max speed or $\leq 0.1\%$ max speed. In particular, the increase of the speed may be from zero.

The increase of the speed may be essentially monotonous (e.g. the speed essentially never drops) or essentially strictly monotonous (e.g. the speed essentially always increases). In particular, the increase of the speed may be monotonous (e.g. the speed never drops) or strictly monotonous (e.g. the speed always increases).

**Fig. 3a** illustrates an example embodiment of the method 100, wherein step 140 is right after step 120, step 150 is right after step 140, step 150 is right after step 160 and step 170 is right after step 160.

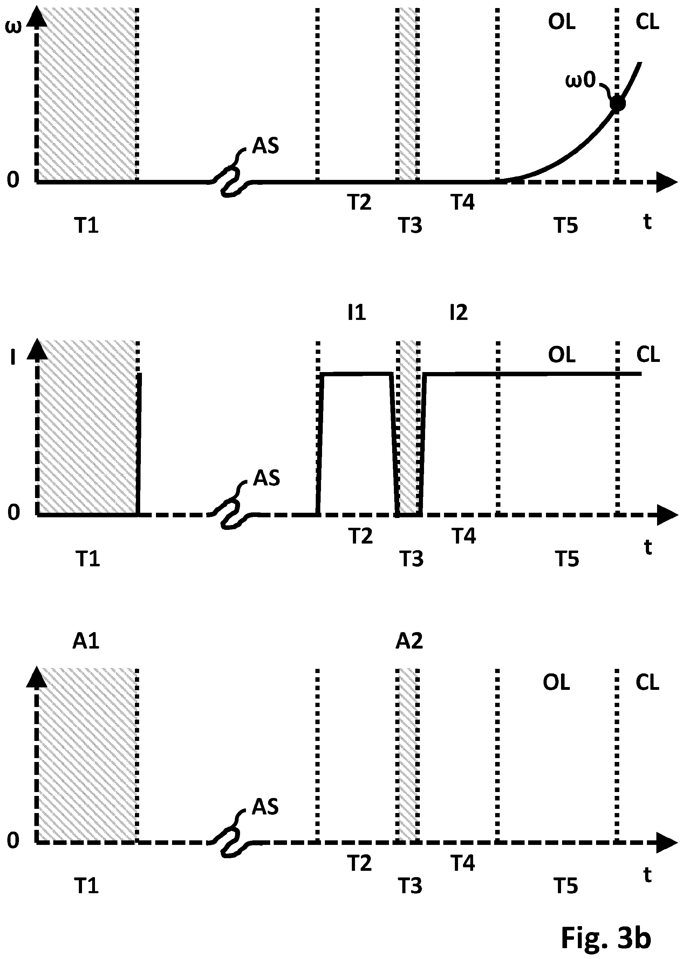

**Fig. 3b** illustrates an example embodiment of the method 100, wherein the same applies except that step 140 is not right after step 120 because of an alternating succession AS in between them.

As schematically illustrated as an option in **Fig. 4a-b,** the method 100 may comprise switching 180, upon reaching the speed threshold $\omega 0$ (or afterwards), to closed-loop control CL of the motor. The closed-loop control (CL) may be based on an estimated position of the rotor of the motor 21 (also known as the rotor position). The rotor position may be an angle (e.g. $\varphi$ as in **Fig. 2a-c**). Alternatively, or in addition, the closed-loop control (CL) may be based on an estimated speed of the rotor of the motor (also known as the rotor speed). In particular, the closed-loop control (CL) may be based on the estimated rotor position and the estimated rotor speed. Estimating the rotor position and/or the rotor speed e.g. based on the induced voltage is known in the art.

Advantageously, in the method 100 a sensor for measuring the position and/or speed of the rotor of the motor is not needed. In particular, a rotor position sensor is not needed. Such control may be referred to as sensorless control. On the other hand, there may still be other sensors such as one or more phase current sensors and the like.

The speed threshold $\omega 0$ may be chosen in such a way that the estimation of the position and/or speed of the rotor of the motor is sufficiently reliable. The speed threshold $\omega 0$ is not zero (either positive or negative, e.g. depending on the intended direction). In other words, a minimum speed of the rotor is required in order to reliably estimate the position and/or speed of the rotor.

Motor control below this speed threshold $\omega 0$ is open-loop (OL) insofar as (not even a reliable estimate for) the position of the rotor needed in the vector control of the motor is lacking but is provided based on the crank-up profile, e.g. by the position curve corresponding to a predetermined speed curve as e.g. illustrated during the fifth period of time in **Fig. 3a-c.** For example, the speed threshold $\omega 0$ may be $\geq 10$ rpm, $\geq 20$ rpm, $\geq 50$ rpm, $\geq 100$ rpm, $\geq 200$ rpm or $\geq 500$ rpm. Thresholds and/or ranges for the speed threshold $\omega 0$ and, in particular, the speed thresholds $\omega 0$ may be application-specific. In general, they may depend on the back electromotive force (back emf) voltage of the motor. In fact, the speed threshold $\omega 0$ may be (and needs to be) sufficiently large in order to allow for a back emf voltage that is sufficiently high, thereby rendering the estimation of the position and/or speed of the motor sufficiently reliable. For example, the speed threshold $\omega 0$ may be e.g. between 1% and 8% of the maximum speed of the motor. In particular, the speed threshold $\omega 0$ may be e.g. between 2% and 5% of the maximum speed of the motor.

The second period of time T2 and the fourth period of time T4 may be essentially of equal duration. For example, the second period of time T2 and the fourth period of time T4 may be essentially of equal duration, when a predetermined criterion is satisfied, e.g. when they differ by e.g. less than 20%, less than 10%, less than 5 % or less than 1 %. In particular, the second period of time T2 and the fourth period of time T4 may be of equal duration.

As illustrated in **Fig. 3b-c** and in **Fig. 4b,** the method 100 may comprise, between the first period of time T1 and the second period of time T2, an alternating succession AS.

The alternating succession AS may comprise at least applying 131, after the first period of time T1, a further first current profile I1.1 to the motor during a further first period of time T1.1. Step 131 does not necessarily have to be right after step 120. On the other hand, step 131 may be right after step 120.

The alternating succession AS may further comprise applying 133, after the further first period of time T1.1, a further first active short profile A1.1 to the motor during a further second period of time T1.2. Step 133 does not necessarily have to be right after step 131. On the other hand, step 133 may be right after step 131.

An alternating succession AS with the steps 131 and 133 can comprise further such steps. For example, the alternating succession AS may comprise a predetermined number n of further periods of time T1.1, T1.3, ..., T1.(2n-1) during each of which a respective further current profile I1.1, I1.2, ..., I1.n is applied 130 to the motor. The alternating succession AS may further comprise the predetermined number n of other further periods of time T1.2, T.1.4, ..., T1.(2n) during each of which a respective further active short profile A1.1, A1.2, ..., A1.n is applied 132 to the motor. The further periods of time T1.1, T1.3, ..., T1.(2n-1) may alternate with the other further periods of time (T1.2, T.1.4, ..., T1.(2n)), and wherein the alternating succession AS starts with the further first period of time T1.1 being one of the further periods of time T1.1, T1.3, ..., T1.(2n-1) to be followed by the further second period of time T1.2 being one of the other further periods of time T1.2, T.1.4, ..., T1.(2n). For example, the alternating succession AS can be I1.1, A1.1, I1.2, A1.2, ..., I1.n, A1.n.

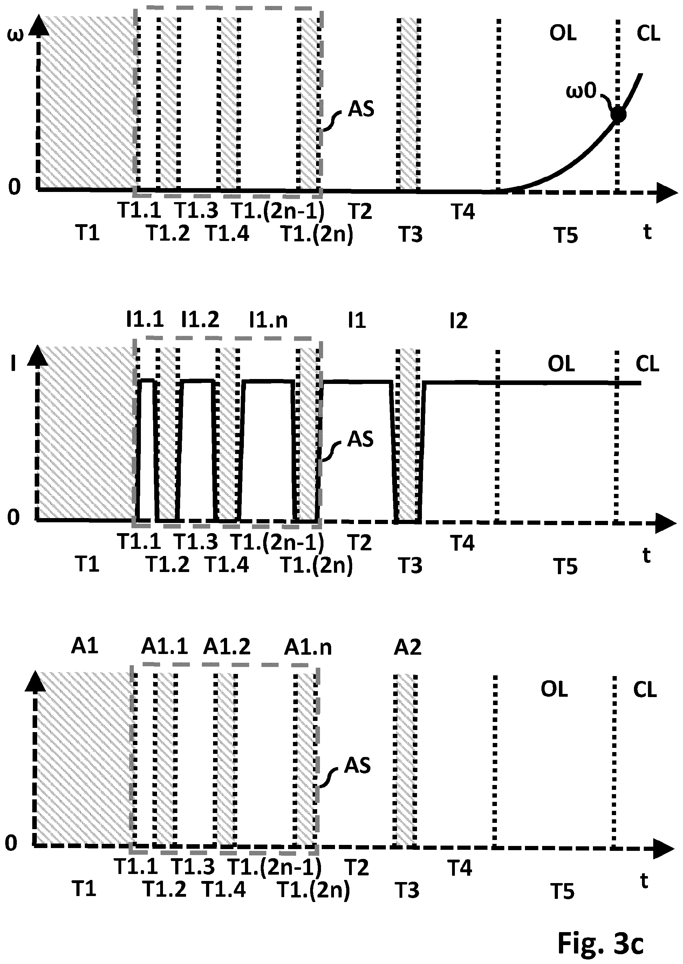

The predetermined number n may be a positive integer, i.e. $n \in \mathbb{N}$ mit $n \geq 1$. In particular, the steps 131, 133 can be seen as an alternating succession AS with n=1. For example, the predetermined number n may be one $(n = 1)$, two $(n = 2)$, three $(n = 3)$, four $(n = 4)$ or five $(n = 5)$. An example case with $n = 3$ is schematically illustrated in Fig. 3c, wherein in this case I1.n is I1.3 and A1.n is A1.3.

On the other hand, $n = 0$ is also possible, in which case the alternating succession AS is absent, as e.g. schematically illustrated in **Fig. 3a.**

The one or more further periods of time T1.1, T1.3, ..., T1.(2n-1) in the alternating AS succession may successively increase towards the second period of time T2. This increase may be monotonous or strictly monotonous. Here the term "towards" may mean that the nth further period of time T1.(2n-1) may be below the second period of time T2. Alternatively, the term "towards" may mean that the nth further period of time T1.(2n-1) may be essentially the second period of time T2. Such an increase is possible, even if n=1. In fact, in this case, the further first period of time T1.1 may increase towards the second period of time T2.

For example, the further periods of time T1.1, T1.3, ..., T1.(2n-1) in the alternating succession AS may increase successively and essentially linearly towards the second period of time T2. Here periods of time may increase essentially linearly, when they increase based on an exponent sufficiently close to one, i.e. e.g. where successive times obey a law $\alpha T^{\lambda}$ with exponent $\lambda \in [0.95, 1.05]$ and a constant $\alpha \in \mathbb{R}$. In particular, the further periods of time T1.1, T1.3, ..., T1.(2n-1) in the alternating succession AS may increase successively and linearly towards the second period of time T2 (i.e. $\lambda = 1$). Such linear (or essentially linear) increase of the further periods of time may be advantageous for the following reason: In general, it may be a question of the magnitude of the force applied to the rotor. If the initial position of the rotor is in the case where the electromagnetic force will be greatest, i.e. 90° electrically with respect to the reference, then a short instant will have a direct and major impact on the creation of motion. (On the other hand, if the rotor is exactly on the reference or completely opposite (180°), then no movement can be created). It is in starting with small pulses that even in case where the force is greatest (90°), the movement created is not too great. Indeed, if the force was too great, the movement would be energetic and there would be a high risk of creating an excessive rotation. This would mean that when the current returns to zero, the rotation would continue due to inertia and the position could overshoot the initial reference and converge on another unsuitable position (the rotation may not even be complete when the next stationary current is applied - this would create undesired oscillations in the system).

Furthermore, the further first period of time T1.1 may be essentially the second period of time T2 divided by the sum of 1 and the predetermined number n. For example, the further first period of time T1.1 may be essentially the second period of time T2 divided by the sum of 1 and the predetermined number n, when the further first period of time T1.1 is sufficiently close (e.g. differs at most by 10%, at most by 5% or at most by 1%) to the second period of time T2 divided by the sum of 1 and the predetermined number n. In particular, the further first period of time T1.1 may be the second period of time T2 divided by the sum of 1 and the predetermined number n.

For example, in case where the predetermined number n is one (n = 1), the further first period of time T1.1 is essentially (or equals) the second period of time T2 divided by 2. In another example, in case where the predetermined number n is three (n = 3), the further first period of time T1.1 is essentially (or equals) the second period of time T2 divided by 4. This is illustrated in **Fig. 3c.**

Such an increase is possible, even if n=1. In fact, in this case, the further first period of time T1.1 may be chosen to be essentially (or precisely) the second period of time T2 divided by 2.

A profile such as a current profile like any of I1, I1.1, I1.2, ..., I1.n, I2 or an active short profile like any of A1, A1.1, A1.2, ..., A1.n, A2 may comprise one or more time curves (or portions thereof), each of the one or more time curves encoding a steering/control parameter of the motor (rotor speed, current, active short configuration).

Each of applying 120, 132, 133, 150 the first active short profile A1, the second active short profile A2, if present, the further first active short profile A1.1 and/or one or more of the further active short profiles A1.1, A1.2, ..., A1.n may comprise applying a zero space vector essentially over the duration of the respective active short profile. In other words, applying 120 the first active short profile A1 may comprise applying a zero space vector essentially over the first period of time T1, etc.. The term "essentially over the duration" may mean that one or more zero space vectors are applied in sufficiently many time proportions of the respective active short profile (e.g. in more than 85%, 90% or 95%). In particular, each of applying 120, 132, 133, 150 the first active short profile

A1, the second active short profile A2, if present, the further first active short profile A1.1 and/or one or more of the further active short profiles A1.1, A1.2, ..., A1.n may comprise applying a zero space vector over the duration of the respective active short profile. Such time proportions of 100% are illustrated in the lower diagrams of **Fig. 3a-c** time.

Applying a zero space vector may comprise (or consist of) - e.g. in case of a two-level three-phase inverter - closing all lower switches SU0, SV0, SW0 of the inverter 10 (these connected to one potential of the direct current, DC, supply UDC), while keeping all upper switches SU1, SV1, SW1 of the inverter 10 (those connected to the other potential of the direct, DC, current supply UDC) open. Alternatively, applying a zero space vector may comprise (or consist of) closing all upper switches of an inverter, while keeping all lower switches of the inverter open. In the method 100, it can be advantageous to implement successive active short profiles alternatingly on upper and lower switches of the inverter. Furthermore, within one respective active short profile (or each of the respective active short profiles) it can be advantageous to alternate between zero space vectors based on closing all lower switches and zero space vectors based on closing all upper switches. In so doing, load and, in particular, heat, can be distributed over both upper and lower switches of the inverter. Beneficially, the lifetime of the inverter can be increased. In case of a multilevel inverter with three or more voltage levels applying a zero space vector may comprise (or consist of) closing a subset of switches of the inverter, while keeping the remaining switches of the inverter open. Depending on the topology of the multi-level inverter a plurality of switch constellations may lead to applying a zero space vector. Again, any such switch constellation may apply and such switch constellations may be varied.

Each of the one or more zero space vectors may be a zero voltage in the $U_q/U_d$ frame.

Each duration of the respective active short profiles is sufficiently large to allow phase currents of the motor to abate to essentially zero (e.g. to less than 5% or less than 1 % of the maximally allowed phase current), in particular, wherein each duration of the respective active short profiles may last at least 0.1 second, at least 0.2 second, at least 0.5 second or at least 1 second. Each duration may be individually chosen (i.e. they may be different) or one or more or all of the durations may be equal. In any case, one or more of the durations may be application-specific. They may be chosen depending e.g. on the inertia of the rotor, the machine short-circuit torque, and/or further motor properties (e.g. dimensions).

In other words, applying one or more zero space vectors within a respective active short profile is performed outside of space vector modulation. The latter uses zero space vectors on a (much) shorter time scale, thereby mixing space vectors to produce a space vector effectively at reduced absolute value. In contrast, each of the active short profiles applies effectively one or more zero space vectors over the duration of the respective active short profiles. In so doing, the rotor of the motor (moving in whatever direction) is slowed down.

It is possible that over the duration of the respective active short profile vector control is not applied. Vector control is also referred to as field-oriented control. In particular, over the duration of the respective active short profile, control of the motor does not depend on controller outputs such as e.g. outputs from PI controllers for $I_q$ (quadrature current), $I_d$ (direct current) respectively (also referred to as $U_q$ and $U_d$). $I_q$ and $I_d$ form a stationary vector in the $I_q/I_d$ frame, i.e. while it may vary, it does not vary with the rotor position of a moving rotor. Furthermore, over the duration of the respective active short profile, control of the motor does also not depend on the position and/or the speed of the rotor. On the other hand, vector control may be applied during each of the current profiles I1, I1.1, I1.2, ..., I1.n, I2.

The first period of time T1 may be larger than the third period of time T3 and, if present, than each of the other further periods of time T1.2, T.1.4, ..., T1.(2n). This (and the fact, that the method may start with the first active short profile A1) is advantageous e.g. in applications where the motor drives a fan that wind from the environment of the fan can cause to rotate. It aims at braking the wind-induced rotation.

For example, as e.g. illustrated in Fig. 3c, the third period of time T3 may be essentially (e.g. differ by less than 5%) equal to each of the other further periods of time T1.2, T.1.4, ..., T1.(2n). In particular, the third period of time T3 may be equal to each of the other further periods of time T1.2, T.1.4, ..., T1.(2n).

Each of applying 140, 130, 131, 160 the first current profile I1, the second current profile I2, if present, the further first current profile I1.1 and/or one or more of the further current profiles 11.1, I1.2, ..., I1.n may comprise applying vector control with essentially zero rotor speed (e.g. less than 10 rpm) and/or essentially constant rotor position. In other words, each of applying 140, 130, 131, 160 the first current profile I1, the second current profile I2, if present, the further first current profile I1.1 and/or one or more of the further current profiles I1.1, I1.2, ..., I1.n may comprise applying vector control with essentially zero rotor speed (e.g. less than 10 rpm). This is e.g. illustrated in the upper diagrams of **Fig. 3a-c.** Alternatively, or in addition, each of applying 140, 130, 131, 160 the first current profile I1, the second current profile I2, if present, the further first current profile I1.1 and/or one or more of the further current profiles 11.1, I1.2, ..., I1.n may comprise applying vector control with essentially constant rotor position. Applying 140, 130, 131, 160 such current profiles can also be referred to as open-loop control, albeit with target speed essentially being zero and/or target rotor position essentially being constant. In other words, here the rotor speed and/or the rotor position are target values in open-loop vector control (in contrast to actual values which during sensorless start-up are typically unknown).

Applying vector control with essentially zero speed may mean that (target) speeds are applied during the respective duration that are always below a non-zero speed, as long as the absolute value of this non-zero speed is sufficiently small. For example, this non-zero speed is sufficiently small, when its absolute value is $\leq 20$ rpm, $\leq 10$ rpm, $\leq 5$ rpm, $\leq 1$ rpm, or $\leq 0.1$ rpm. A threshold value of this kind for the criterion "essentially zero" may be application-specific. For example, it may be defined relative to the maximum speed of the motor, e.g. $\leq 5\%$ max speed, $\leq 1\%$ max speed or $\leq 0.1\%$ max speed. In particular, the threshold value and, hence, all speeds applied during the respective duration may be zero.

Applying vector control with essentially constant rotor position may mean that (target) rotor positions are applied during the respective duration that are always in a sufficiently small range around a given (target) rotor position. For example, this range may be derived from any of the aforementioned criteria for the speed being essentially zero. A range of this kind for the criterion "essentially constant" may be application-specific. Alternatively, the range may be defined as a constant rotor position less than $\pm 5\%$, $\pm 2\%$ or $\pm 1\%$. In particular, the range may degenerate to $\pm 0\%$ (i.e. constant rotor position).

Furthermore, each of applying 140, 130, 131, 160 the first current profile I1, the second current profile I2, if present, the further first current profile I1.1 and/or one or more of the further current profiles I1.1, I1.2, ..., I1.n may comprise applying a non-zero current to the motor, in particular, applying a quadrature current $I_q$ (in the $I_q/I_d$ frame) larger or less than zero. This is e.g. illustrated in the middle diagrams of **Fig. 3a-c.**

In other words, in each of the second period of time T2, the fourth period of time T4 and, if present, the one or more further periods of time T1.1, T1.3, ..., T1.(2n-1), there needs to be at least one point in time where the current is non-zero and, in particular, where the quadrature current $I_q$ is larger than zero. In case the rotor shall be started in the opposite direction, there needs to be at least one point in time of the aforementioned periods of time where the current the quadrature current $I_q$ is less than zero.

Furthermore, each of applying 140, 130, 131, 160 the first current profile I1, the second current profile I2, if present, the further first current profile I1.1 and/or one or more of the further current profiles I1.1, I1.2, ..., I1.n may comprise applying a quadrature current $I_q$ that is essentially constant over the duration of the respective current profile. For example, the term "essentially constant" may mean that a maximum and minimum of the quadrature current $I_q$ in the respective current profile differ from the mean of the quadrature current $I_q$ in the respective current profile by less than 5%. This is also illustrated in the middle diagrams of **Fig. 3a-c.** In particular, each of applying 140, 130, 131, 160 the first current profile I1, the second current profile I2, if present, the further first current profile I1.1 and/or one or more of the further current profiles I1.1, I1.2, ..., I1.n may comprise applying a quadrature current $I_q$ that is constant over the duration of the respective current profile.

Furthermore, applying 140, 130, 131, 160 the first current profile I1, the second current profile I2, if present, the further first current profile I1.1 and/or one or more of the further current profiles I1.1, I1.2, ..., I1.n may comprise applying a quadrature current $I_q$ that is essentially constant over all durations of the respective current profiles I1, 11.1, I1.2, ..., I1.n, I2. In other words, in this case, the essentially same constant quadrature current $I_q$ is applied to all the respective current profiles. For example, the term "essentially constant" may mean that a maximum and minimum of the quadrature current $I_q$ in the respective current profiles differ from the mean of the quadrature current $I_q$ in the respective current profiles by less than 5%. In particular, applying 140, 130, 131, 160 the first current profile I1, the second current profile I2, if present, the further first current profile I1.1 and/or one or more of the further current profiles I1.1, I1.2, ..., I1.n may comprise applying a quadrature current $I_q$ that is constant over all durations of the respective current profiles I1, 11.1, I1.2, ..., I1.n, I2. In other words, in this case, the same constant quadrature current $I_q$ is applied to all the respective current profiles.

Furthermore, each of applying 140, 130, 131, 160 the first current profile I1, the second current profile I2, if present, the further first current profile I1.1 and/or one or more of the further current profiles 11.1, I1.2, ..., I1.n may comprise applying essentially zero direct current $I_d$. In the method 100, the direct current $I_d$ may always be essentially zero or zero, in particular, zero. On the other hand, the direct current $I_d$ may very within a current profile and/or in between current profiles.

For example, each duration of the respective current profiles may last at least 0.1 second, at least 0.2 second, at least 0.5 second or at least 1 second. Each duration may be individually chosen (i.e. they may be different) or one or more or all of the durations may be equal. In any case, one or more of the durations may be application-specific. They may be chosen depending e.g. on the inertia of the rotor, the short-circuit torque and/or further motor properties (e.g. dimensions).

Applying 170 the open-loop control OL of the motor based on the crank-up profile may comprise essentially increasing or essentially strictly increasing the rotor speed to the speed threshold $\omega 0$ and possibly beyond. In particular, applying 170 the open-loop control OL of the motor based on the crank-up profile may comprise increasing or strictly increasing the rotor speed to the speed threshold $\omega 0$ and possibly beyond.

For example, applying 170 the open-loop control OL of the motor based on the crank-up profile may comprise increasing the rotor speed essentially quadratically from essentially zero (or zero) to the speed threshold $\omega 0$ or to a speed below the speed threshold $\omega 0$ where a maximum acceleration of the motor is reached, in particular, wherein from this speed below the speed

threshold $\omega 0$ the speed increases essentially linearly to the speed threshold $\omega 0$. In other words, up to the maximum acceleration the rotor speed may be increased essentially quadratically and after reaching the maximum the rotor speed may be increased essentially linearly. The term "essentially quadratically" may mean that the rotor speed increases according to a law $k\,t^\mu$ with exponent e.g. $\mu$ E [1.95, 2.05] and a constant k E II8 with t being a parameter for the time (in a coordinate system starting at the beginning of the fifth period of time T5). In particular, applying 170 the open-loop control OL of the motor based on the crank-up profile may comprise increasing the rotor speed quadratically from essentially zero (or zero) to the speed threshold $\omega 0$ or to a speed below the speed threshold $\omega 0$ where a maximum acceleration of the motor is reached. In this case, $\mu=2$. The progressive quadratic speed has been found to lead to jerk-free operation and a well-behaved motor start.

Similarly, the term "essentially linearly" may mean that the rotor speed increases according to a law $k\,t^\mu$ with exponent e.g. $\mu$ E [0.95, 1.05] and a constant

$$k \in \mathbb{R}$$

with t being a parameter for the time (in a coordinate system where the point of reaching the maximum acceleration is the origin).

In another example, applying 170 the open-loop control OL of the motor based on the crank-up profile may comprise increasing the rotor speed essentially linearly (or linearly) from essentially zero (or zero) to the speed threshold $\omega 0$ and possibly beyond. The term "essentially linearly" may mean that the rotor speed increases according to a law $k\,t^\mu$ with exponent e.g. $\mu$ E [0.95, 1.05] and a constant k E II8 with t being a parameter for the time (in a coordinate system starting at the beginning of the fifth period of time T5).

It was found that increasing the target speed essentially quadratically rather than essentially linearly leads to the motor start being more stable.

The (rotor) speed in the crank-up profile is a target speed, not a measured or estimated speed of the rotor. After reaching the speed threshold $\omega 0$, the speed $\omega$ shown in Fig. 3a-c may be the estimated speed of the rotor (in fact, above the speed threshold $\omega 0$ the estimation of the rotor speed and/or rotor position may be reliable).

Furthermore, applying 170 the open-loop control OL of the motor based on the crank-up profile may comprise applying a non-zero current to the motor, in particular, applying a quadrature current $I_q$ larger or less than zero. The quadrature current $I_q$ may be larger than zero. However, in case the rotor shall be started in the opposite direction, the quadrature current $I_q$ may be less than zero.

Furthermore, applying the open-loop control OL of the motor based on the crank-up profile may comprise applying a quadrature current $I_q$ that is essentially constant during the fifth period of time T5. This is illustrated in the middle diagrams of Fig. 3a-c.

Furthermore, currents applied during the second current profile I2 and the crank-up profile are continuous. Here "continuous" may mean that there is no jump in a transition from the fourth period of time T4 to the fifth period of time T5. This is also illustrated in the middle diagrams of **Fig. 3a-c.**

One or more of the first active short profile A1, the first current profile I1, the second active short profile A2, the second current profile I2, the crank-up profile and/or, if present, the alternating succession AS may be predetermined. In particular, the first active short profile A1 may be predetermined. Alternatively, or in addition, the first current profile I1 may be predetermined. Alternatively, or in addition, the second active short profile A2 may be predetermined. Alternatively, or in addition, the second current profile I2 may be predetermined. Alternatively, or in addition, the alternating succession AS may be predetermined. In particular, all of the first active short profile A1, the first current profile I1, the second active short profile A2, the second current profile I2, the crank-up profile and/or, if present, the alternating succession AS may be predetermined. In particular, a starting routine of the motor 21 (e.g. the entire starting routine of the motor 21) comprising the steps of the method 100 (or embodiments thereof) may be predetermined.

For example, the starting routine of the motor 21 may only comprise the successive steps 120, 140, 150, 170. In another example, the starting routine of the motor 21 may only comprise the successive steps 120, 140, 150, 170, 180. In another example, the starting routine of the motor 21 may only comprise the successive steps 110, 120, 140, 150, 170. In another example, the starting routine of the motor 21 may only comprise the successive steps 110, 120, 140, 150, 170, 180.

For example, the starting routine of the motor 21 may only comprise the successive steps 120, 140, 150, 160, 170. In another example, the starting routine of the motor 21 may only comprise the successive steps 120, 140, 150, 160, 170, 180. In another example, the starting routine of the motor 21 may only comprise the successive steps 110, 120, 140, 150, 160, 170. In another example, the starting routine of the motor 21 may only comprise the successive steps 110, 120, 140, 150, 160, 170, 180.

For example, the starting routine of the motor 21 may only comprise the successive steps 120, AS, 140, 150, 170. In another example, the starting routine of the motor 21 may only comprise the successive steps 120, AS, 140, 150, 170, 180. In another example, the starting routine of the motor 21 may only comprise the successive steps 110, 120, AS, 140, 150, 170. In another example, the starting routine of the motor 21 may only comprise the successive steps 110, 120, AS, 140, 150, 170, 180.

For example, the starting routine of the motor 21 may only comprise the successive steps 120, AS, 140, 150, 160, 170. In another example, the starting routine of the motor 21 may only comprise the successive steps 120, AS, 140, 150, 160, 170, 180. In another example, the starting routine of the motor 21 may only comprise the successive steps 110, 120, 140, 150, 160, 170. In another example, the starting routine of the motor 21 may only comprise the successive steps 110, 120, 140, 150, 160, 170, 180.

On the other hand, these examples shall not be construed as limiting the scope of the starting routine. In fact, the starting routine may comprise - in addition to the steps of the method 100 (or embodiments thereof) - other steps and/or pauses.

The motor 21 may be started by the predetermined starting routine, the starting routine comprising the steps of the method 100.

The motor 21 may be started (using the method 100 or the starting routine) until the speed threshold $\omega 0$ is reached independently of any sensor input (e.g. from one or more current sensors).

The motor 21 may be started without prior (i.e. before step 110 or 120 of the method 100) investigation of a rotor state. Alternatively, or in addition, the motor 21 may be started without intermediate (i.e. during the starting routine) investigation of the rotor state. In particular, the motor 21 may be started without prior investigation of the rotor state and without intermediate investigation of the rotor state.

An investigation of the rotor state (any of which is not required to start the motor according to the method 100) may comprise determining whether or not the rotor is rotating (based on a sensor input, possibly prompted by a preceding injection). Alternatively, or in addition, an investigation of the rotor state may comprise determining whether or not the rotor is rotating into the desired direction (based on a sensor input, possibly prompted by a preceding injection). Alternatively, or in addition, an investigation of the rotor state may comprise determining whether or not the rotor is rotating into the wrong direction, the one opposite the desired direction, (based on a sensor input, possibly prompted by a preceding injection). Alternatively, or in addition, an investigation of the rotor state may comprise determining whether or not the rotor is oscillating (based on a sensor input, possibly prompted by a preceding injection).

In other words, the method 100 does not have to comprise monitoring, before start-up, whether or not the rotor is rotating and/or where the rotor angle is located. The method 100 does also not have to comprise monitoring, during start-up, whether or not the rotor is rotating in the desired direction. The method 100 does also not have to comprise monitoring, during start-up, whether or not the rotor is oscillating (i.e. undesired rapid changes of direction).

In some embodiments, the method 100 does not comprise (nor is it preceded by) monitoring, before start-up, whether or not the rotor is rotating and/or where the rotor angle is located. Alternatively, or in addition, in some embodiments, the method 100 does not comprise monitoring, during start-up, whether or not the rotor is rotating in the desired direction. Alternatively, or in addition, in some embodiments, the method 100 does not comprise monitoring, during start-up, whether or not the rotor is oscillating.

The method 100 has been successfully tested in experiments. In contrast to rotor angles evolving in conventional start schemes as schematically illustrated in **Fig. 2a-b,** the motor started by method 100 is much less prone to starting into the wrong direction and reduces initial oscillations, as schematically illustrated in **Fig. 2c.** As a result, the engagement time (e.g. from zero to an idle speed) is reduced. In particular, this engagement time is reduced in reducing rotor travel into the wrong direction.

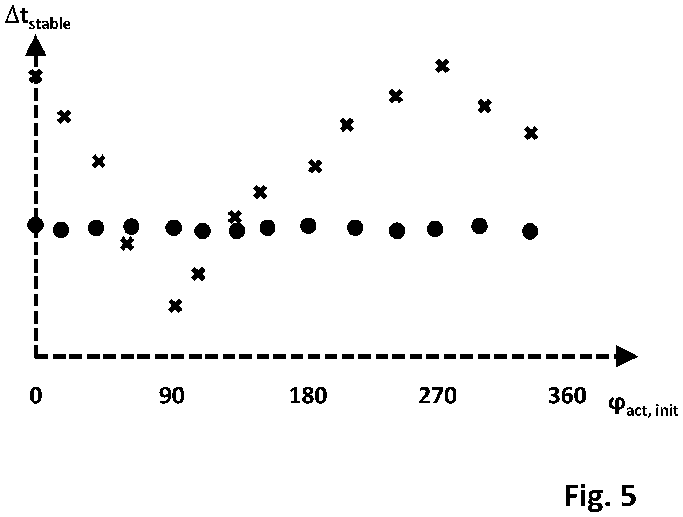

Furthermore, times for stabilizing the rotor are reduced as compared to conventional start-up methods (at least on average). A time for stabilizing the rotor may be the time needed to end a rotation in the undesired direction and/or to abate undesired oscillations. This is schematically illustrated (based on measurements) in **Fig. 5** showing differences $\Delta t_{stable}$ in the time for stabilization in both a conventional motor start-up (depicted as crosses) and a motor start-up as of method 100 (depicted as filled circles) each starting from varying initial actual rotor positions. While here these positions were measured in a test setup using a rotor position sensor, they are typically unknown in sensorless start-up. While at initial actual rotor positions at around 90° the times for stabilization may be enlarged as compared to a conventional motor start-up, on average times for stabilization for all possible rotor positions are reduced. Given that a rotor of a fan may rotate even when not driven by the motor (e.g. due to wind) the initial actual rotor position (even during movement) is rarely at 90°. Hence, times for stabilizing the rotor are effectively reduced as compared to conventional start-up methods.

There is further disclosed an inverter for driving an AC electric motor 21. The inverter may comprise three or more first switches, each connecting (not necessarily directly) one potential of a DC supply to a respective phase of the motor. The inverter may furthermore comprise three or more second switches, each connecting (not necessarily directly) another potential of the DC supply to a respective phase of the motor. For example, and typically, the inverter may comprise three or more phases.

For example, and as e.g. schematically illustrated in Fig. 1, the inverter may be a two-level inverter, in particular a two-level three-phase inverter. The inverter 10 may comprise three or more lower switches SU0, SV0, SW0, being the first switches, each connecting (e.g. directly) one potential of a DC supply UDC to a respective phase U, V, W of the motor 21. The inverter 10 may further comprise three or more upper switches SU1, SV1, SW1, being the second switches, each connecting (e.g. directly) another potential of the DC supply UDC to a respective phase U, V, W of the motor 21.

In another example, the inverter may be a multi-level inverter e.g. with three phases or more (e.g. 4, 5 or 6 phases). The multi-level inverter may have three or more voltage levels (e.g. 3, 5 or 7 levels), two of which may be the potential of the DC supply and the other potential of the DC supply. In other words, the multi-level inverter may be configured to provide three or more voltage levels by hardware configuration (i.e. each level by a constellation of switches) rather than by space vector mixing. The multi-level inverter may comprise a plurality of switches comprising the first and second switches each connecting one of the potentials of the DC supply UDC to the respective phases. The multi-level inverter may comprise one or more further switches that may connect one of the potentials of DC supply UDC or another potential to the respective phases. Various designs for multi-level inverters may apply. Any such multi-level inverter may be used. Multi-level inverters with three or more voltage levels are advantageous as target voltages can be applied with less harmonics, thereby reducing energy losses. In particular, reducing the harmonics may be advantageous during start-up, thereby enhancing stabilization of the rotor.

On the other hand, the inverter can have less than three lower switches (e.g. two) and less than three upper switches (e.g. two), e.g. in case there are only two phases.

The inverter, as e.g. schematically illustrated in Fig. 1, further comprises a computer system ECU (also known as an electronic control unit) configured to execute the computer-implemented method 100 for starting the motor 21, thereby actuating at least the three or more (or less than three) first and second switches (more precisely, certain combinations thereof e.g. in vector control and for active short) and possibly the one or more further switches. The computer system ECU such as e.g. a (micro)controller may comprise a processor and a RAM. The computer system may comprise a non-volatile memory such as e.g. a flash memory.

There is further disclosed a motor system 20, as e.g. also schematically illustrated in Fig. 1, comprising the inverter 10 and the motor 21.

There is further disclosed a fan 30, as e.g. also schematically illustrated in Fig. 1, comprising the motor system 20 and an impeller 31 mechanically connected to a rotor of the motor 21.

There is further disclosed a computer program configured to execute the computer-implemented method 100 for starting the motor 10. There is further disclosed a signal configured to execute the computer-implemented method 100 for starting the motor 10. Each of the computer program or the signal may be interpretable and/or executable. Each of the computer program or signal may be loaded (also in part) as a bit or byte sequence into the RAM of the computer system ECU.

There is further disclosed a computer-readable medium storing the computer program and/or the signal. For example, the medium may comprise a volatile or non-volatile memory such as e.g. RAM, ROM, EPROM, HDD, SDD or the like.

Although the present subject-matter has been described above and is defined in the attached claims, it should be understood that the subject-matter may alternatively be defined in accordance with the following embodiments:

1. A computer-implemented method (100) for starting an AC electric motor (21) comprising:

- optionally, receiving (110) a control signal for starting the motor;
- applying (120), in response to receiving the control signal for starting the motor (21) or to being supplied by power, a first active short profile (A1) to the motor (21) during a first period of time (T1);
- applying (140), after the first period of time (T1), a first current profile (I1) to the motor (21) during a second period of time (T2);
- applying (150), after the second period of time (T2), a second active short profile (A2) to the motor (21) during a third period of time (T3);
- optionally, applying (160), after the third period of time (T3), a second current profile (I2) to the motor (21) during a fourth period of time (T4);
- applying (170), after the third period of time (T3) and/or after the fourth period of time (T4), open-loop control (OL) of the motor (21) based on a crank-up profile wherein a speed of the rotor of the motor (21) is increased from essentially zero to a speed threshold ($\omega 0$) during a fifth period of time (T5).

2. The method (100) of embodiment 1, comprising:

- switching (180), upon reaching the speed threshold ($\omega 0$), to closed-loop control (CL) of the motor, in particular, wherein the closed-loop control (CL) is based on an estimated position and/or estimated speed of the rotor of the motor.

3. The method (100) of embodiment 1 or 2, wherein the second period of time (T2) and the fourth period of time (T4) are essentially of equal duration.

4. The method (100) of one of the preceding embodiments, wherein the method comprises, between the first period of time (T1) and the second period of time (T2), an alternating succession (AS) comprising at least:

- applying (131), after the first period of time (T1), a further first current profile (I1.1) to the motor during a further first period of time (T1.1);
- applying (133), after the further first period of time (T1.1), a further first active short profile (A1.1) to the motor during a further second period of time (T1.2).

5. The method (100) of embodiment 4, wherein the alternating succession (AS) comprises:

- a predetermined number (n) of further periods of time (T1.1, T1.3, ..., T1.(2n-1)) during each of which a respective further current profile (I1.1, I1.2, ..., I1.n) is applied (130) to the motor; and
- the predetermined number (n) of other further periods of time (T1.2, T.1.4, ..., T1.(2n)) during each of which a respective further active short profile (A1.1, A1.2, ..., A1.n) is applied (132) to the motor;

wherein the further periods of time (T1.1, T1.3, ..., T1.(2n-1)) alternate with the other further periods of time (T1.2, T.1.4, ..., T1.(2n)), and wherein the alternating succession (AS) starts with the further first period of time (T1.1) being one of the further periods of time (T1.1, T1.3, ..., T1.(2n-1)) to be followed by the further second period of time (T1.2) being one of the other further periods of time (T1.2, T.1.4, ..., T1.(2n)).

6. The method (100) of embodiment 4 or 5, wherein the one or more further periods of time (T1.1, T1.3, ..., T1.(2n-1)) in the alternating (AS) succession successively increase towards the second period of time (T2).

7. The method (100) of embodiment 6, when dependent on embodiment 5, wherein the further periods of time (T1.1, T1.3, ..., T1.(2n-1)) in the alternating succession (AS) increase successively and essentially linearly towards the second period of time (T2), in particular, wherein the further first period of time (T1.1) is essentially the second period of time (T2) divided by the sum of 1 and the predetermined number (n).

8. The method (100) of one of the preceding embodiments, wherein each of applying (120, 132, 133, 150) the first active short profile (A1), the second active short profile (A2), when dependent on embodiment 4, the further first active short profile (A1.1) and/or, when dependent on embodiment 5, one or more of the further active short profiles (A1.1, A1.2, ..., A1.n) comprises applying a zero space vector essentially over the duration of the respective active short profile.

9. The method (100) of embodiment 8, wherein each duration of the respective active short profiles is sufficiently large to allow phase currents of the motor to abate to essentially zero, in particular, wherein each duration of the respective active short profiles lasts at least 0.1 second, at least 0.2 second, at least 0.5 second or at least 1 second.

10. The method (100) of embodiment 8 or 9, wherein over the duration of the respective active short profile vector control is not applied.

11. The method (100) of one of the preceding embodiments, wherein the first period of time (T1) is larger than the third period of time (T3) and, when dependent on embodiment 5, than each of the other further periods of time (T1.2, T.1.4, ..., T1.(2n)).

12. The method (100) of one of the preceding embodiments, wherein each of applying (140, 130, 131, 160) the first current profile (I1), the second current profile (I2), when dependent on embodiment 4, the further first current profile (I1.1) and/or, when dependent on embodiment 5, one or more of the further current profiles (I1.1, I1.2, ..., I1.n) comprises applying vector control with essentially zero rotor speed and/or essentially constant rotor position.

13. The method (100) of embodiment 12, wherein each of applying (140, 130, 131, 160) the first current profile (I1), the second current profile (I2), when dependent on embodiment 4, the further first current profile (I1.1) and/or, when dependent on embodiment 5, one or more of the further current profiles (I1.1, I1.2, ..., I1.n) comprises applying a non-zero current to the motor, in particular, applying a quadrature current $I_q$ larger or less than zero.

14. The method (100) of embodiment 13, wherein each of applying (140, 130, 131, 160) the first current profile (I1), the second current profile (I2), when dependent on embodiment 4, the further first current profile (I1.1) and/or, when dependent on embodiment 5, one or more of the further current profiles (I1.1, I1.2, ..., I1.n) comprises applying a quadrature current $I_q$ that is essentially constant over the duration of the respective current profile.

15. The method (100) of embodiment 14, wherein applying (140, 130, 131, 160) the first current profile (I1), the second current profile (I2), when dependent on embodiment 4, the further first current profile (I1.1) and/or, when dependent on embodiment 5, one or more of the further current profiles (I1.1, I1.2, ..., I1.n) comprises applying a quadrature current $I_q$ that is essentially constant over all durations of the respective current profiles (I1, 11.1, I1.2, ..., I1.n, I2).

16. The method (100) of one of the embodiments 12 to 15, wherein each of applying (140, 130, 131, 160) the first current profile (I1), the second current profile (I2), when dependent on embodiment 4, the further first current profile (I1.1) and/or, when dependent on embodiment 5, one or more of the further current profiles (I1.1, I1.2, ..., I1.n) comprises applying essentially zero direct current $I_d$.

17. The method (100) of one of the preceding embodiments, wherein applying (170) the open-loop control (OL) of the motor based on the crank-up profile comprises increasing the rotor speed essentially quadratically from essentially zero to the speed threshold ($\omega 0$) or to a speed below the speed threshold ($\omega 0$) where a maximum acceleration of the motor is reached, in particular, wherein from this speed below the speed threshold ($\omega 0$) the speed increases essentially linearly to the speed threshold ($\omega 0$).

18. The method (100) of one of the preceding embodiments, wherein applying (170) the open-loop control (OL) of the motor based on the crank-up profile comprises applying a non-zero current to the motor, in particular, applying a quadrature current $I_q$ larger or less than zero.

19. The method (100) of embodiment 18, wherein applying the open-loop control (OL) of the motor based on the crank-up profile comprises applying a quadrature current $I_q$ that is essentially constant during the fifth period of time (T5).

20. The method (100) of one of the embodiments 17 to 19, wherein currents applied during the second current profile (I2) and the crank-up profile are continuous.

21. The method (100) of one of the preceding embodiments, wherein one or more of the first active short profile (A1), the first current profile (I1), the second active short profile (A2), the second current profile (I2), the crank-up profile and/or, when dependent on embodiment 4, the alternating succession (AS) are predetermined, in particular, wherein the motor (21) is started by a predetermined starting routine comprising the steps of the method (100).

22. The method (100) of embodiment 21, when dependent on embodiment 2, wherein the motor (21) is started until the speed threshold ($\omega 0$) is reached independently of any sensor input.

23. The method (100) of one of the preceding embodiments, wherein the motor (21) is started without prior and/or intermediate investigation of a rotor state.

24. Inverter (10) for driving an AC electric motor (21), comprising:

- three or more first switches, in particular lower switches (SU0, SV0, SW0), each of the first switches connecting one potential of a DC supply (UDC) to a respective phase (U, V, W) of the motor (21);

- three or more second switches, in particular lower switches (SU1, SV1, SW1), each of the second switches connecting another potential of the DC supply (UDC) to a respective phase (U, V, W) of the motor (21);
- a computer system (ECU) configured to execute the computer-implemented method (100) for starting the motor (21) according to one of the preceding embodiments, thereby actuating the three or more first and second switches.

25. Inverter (10) of embodiment 24, comprising three or more phases.

26. Inverter (10) of embodiment 24 or 25, being a multi-level inverter with three or more voltage levels comprising the one potential of the DC supply (UDC) and the other potential of the DC supply (UDC).

27. Motor system (20) comprising:

- the inverter (10) of one of the embodiments 24 to 26;
- the motor (21).

28. Fan (30) comprising:

- the motor system (20) of embodiment 27;
- an impeller (31) mechanically connected to a rotor of the motor (21).

29. A computer program or signal configured to execute the computer-implemented method (100) for starting the motor (10) according to one of the embodiments 1 to 23.

30. A computer-readable medium storing the computer program or the signal of embodiment 29.

**Claims**

1. A computer-implemented method (100) for starting an AC electric motor (21) comprising:

    - receiving (110) a control signal for starting the motor;
    - applying (120), in response to receiving the control signal for starting the motor (21), a first active short profile (A1) to the motor (21) during a first period of time (T1);
    - applying (140), after the first period of time (T1), a first current profile (I1) to the motor (21) during a second period of time (T2);
    - applying (150), after the second period of time (T2), a second active short profile (A2) to the motor (21) during a third period of time (T3);

    - optionally, applying (160), after the third period of time (T3), a second current profile (I2) to the motor (21) during a fourth period of time (T4);
    - applying (170), after the third period of time (T3) and/or after the fourth period of time (T4), open-loop control (OL) of the motor (21) based on a crank-up profile wherein a speed of the rotor of the motor (21) is increased from essentially zero to a speed threshold ($\omega$0) during a fifth period of time (T5).

2. The method (100) of claim 1, comprising:

    - switching (180), upon reaching the speed threshold ($\omega$0), to closed-loop control (CL) of the motor, in particular, wherein the closed-loop control (CL) is based on an estimated position and/or estimated speed of the rotor of the motor.

3. The method (100) of claim 1 or 2, wherein the second period of time (T2) and the fourth period of time (T4) are essentially of equal duration.

4. The method (100) of one of the preceding claims, wherein the method comprises, between the first period of time (T1) and the second period of time (T2), an alternating succession (AS) comprising at least:

    - applying (131), after the first period of time (T1), a further first current profile (I1.1) to the motor during a further first period of time (T1.1);
    - applying (133), after the further first period of time (T1.1), a further first active short profile (A1.1) to the motor during a further second period of time (T1.2); wherein the alternating succession (AS) comprises:
    - a predetermined number (n) of further periods of time (T1.1, T1.3, ..., T1.(2n-1)) during each of which a respective further current profile (I1.1, I1.2, ..., I1.n) is applied (130) to the motor; and
    - the predetermined number (n) of other further periods of time (T1.2, T.1.4, ..., T1.(2n)) during each of which a respective further active short profile (A1.1, A1.2, ..., A1.n) is applied (132) to the motor;

    wherein the further periods of time (T1.1, T1.3, ..., T1.(2n-1)) alternate with the other further periods of time (T1.2, T.1.4, ..., T1.(2n)), and wherein the alternating succession (AS) starts with the further first period of time (T1.1) being one of the further periods of time (T1.1, T1.3, ..., T1.(2n-1)) to be followed by the further second period of time (T1.2) being one of the other further periods of time (T1.2, T.1.4, ..., T1.(2n)).

5. The method (100) of claim 4, wherein the one or more further periods of time (T1.1, T1.3, ..., T1.(2n-1)) in the alternating (AS) succession successively increase towards the second period of time (T2).

6. The method (100) of claim 5, wherein the further periods of time (T1.1, T1.3, ..., T1.(2n-1)) in the alternating succession (AS) increase successively and essentially linearly towards the second period of time (T2), in particular, wherein the further first period of time (T1.1) is essentially the second period of time (T2) divided by the sum of 1 and the predetermined number (n).

7. The method (100) of one of the preceding claims, wherein each of applying (120, 132, 133, 150) the first active short profile (A1), the second active short profile (A2), when dependent on claim 4, the further first active short profile (A1.1) and/or one or more of the further active short profiles (A1.1, A1.2, ..., A1.n) comprises applying a zero space vector essentially over the duration of the respective active short profile.

8. The method (100) of claim 7, wherein each duration of the respective active short profiles is sufficiently large to allow phase currents of the motor to abate to essentially zero, in particular, wherein each duration of the respective active short profiles lasts at least 0.1 second, at least 0.2 second, at least 0.5 second or at least 1 second.

9. The method (100) of one of the preceding claims, wherein each of applying (140, 130, 131, 160) the first current profile (I1), the second current profile (I2), when dependent on claim 4, the further first current profile (I1.1) and/or one or more of the further current profiles (I1.1, I1.2, ..., I1.n) comprises applying vector control with essentially zero rotor speed and/or essentially constant rotor position.

10. The method (100) of claim 9, wherein each of applying (140, 130, 131, 160) the first current profile (I1), the second current profile (I2), when dependent on claim 4, the further first current profile (I1.1) and/or one or more of the further current profiles (I1.1, I1.2, ..., I1.n) comprises applying a non-zero current to the motor, in particular, applying a quadrature current $I_q$ larger or less than zero.

11. The method (100) of claim 10, wherein each of applying (140, 130, 131, 160) the first current profile (I1), the second current profile (I2), when dependent on claim 4, the further first current profile (I1.1) and/or one or more of the further current profiles (I1.1, I1.2, ..., I1.n) comprises applying a quadrature current $I_q$ that is essentially constant over the duration of the respective current profile.

12. The method (100) of one of the preceding claims, wherein applying (170) the open-loop control (OL) of the motor based on the crank-up profile comprises increasing the rotor speed essentially quadratically from essentially zero to the speed threshold (ω0) or to a speed below the speed threshold (ω0) where a maximum acceleration of the motor is reached, in particular, wherein from this speed below the speed threshold (ω0) the speed increases essentially linearly to the speed threshold (ω0).

13. The method (100) of one of the preceding claims, wherein applying (170) the open-loop control (OL) of the motor based on the crank-up profile comprises applying a non-zero current to the motor, in particular, applying a quadrature current $I_q$ larger or less than zero.

14. The method (100) of one of the preceding claims, wherein one or more of the first active short profile (A1), the first current profile (I1), the second active short profile (A2), the second current profile (I2), the crank-up profile and/or, when dependent on claim 4, the alternating succession (AS) are predetermined, in particular, wherein the motor (21) is started by a predetermined starting routine comprising the steps of the method (100).

15. Inverter (10) for driving an AC electric motor (21), comprising:

   - three or more first switches, in particular lower switches (SU0, SV0, SW0), each of the first switches connecting one potential of a DC supply (UDC) to a respective phase (U, V, W) of the motor (21);
   - three or more second switches, in particular upper switches (SU1, SV1, SW1), each of the second switches connecting another potential of the DC supply (UDC) to a respective phase (U, V, W) of the motor (21);
   - a computer system (ECU) configured to execute the computer-implemented method (100) for starting the motor (21) according to one of the preceding claims, thereby actuating the three or more first and second switches.

**Fig. 1**

**Fig. 2a**

**Fig. 2b**

**Fig. 2c**

Fig. 3a

Fig. 3b

Fig. 3c

100

Fig. 4a

100

130, 132

110 → 120 → 131, 133

140 → 150 → 160

170 → 180

Fig. 4b

Fig. 5

Europäisches Patentamt

European Patent Office

Office européen des brevets

# EUROPEAN SEARCH REPORT

**Application Number**

EP 24 19 2437

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 1 913 332 A (INT RECTIFIER CORP [US]) 14 February 2007 (2007-02-14) | 1-3,12, 13,15 | INV. H02P1/04 |
| A | * abstract; claim 1; figure 2 * ----- | 4-11,14 | H02P1/46 H02P6/18 |
| A | CN 107 317 526 A (SUZHOU PARTTON ELECTRONIC CO LTD) 3 November 2017 (2017-11-03) * abstract; claim 1; figure 5 * ----- | 1-15 | H02P6/21 H02P6/22 H02P21/24 H02P21/34 |
| A | PRAVICA LUKA ET AL: "Flying Start of a Permanent Magnet Wind Power Generator Based on a Discontinuous Converter Operation Mode and a Phase-Locked Loop", IEEE TRANSACTIONS ON INDUSTRIAL ELECTRONICS, [Online] vol. 65, no. 2, 1 February 2018 (2018-02-01), pages 1097-1106, XP093236482, USA ISSN: 0278-0046, DOI: 10.1109/TIE.2017.2733453 Retrieved from the Internet: URL:https://ieeexplore.ieee.org/stampPDF/g etPDF.jsp?tp=&arnumber=7997736&ref=aHR0cHM 6Ly9zY2hvbGFyLmdvb2dsZS5jb20v> * the whole document * ----- | 1-15 | |

**TECHNICAL FIELDS SEARCHED (IPC)**

H02P

The present search report has been drawn up for all claims

| Place of search | Date of completion of the search | Examiner |
|---|---|---|
| Munich | 16 January 2025 | Koteich, Mohamad |

EPO FORM 1503 03.82 (P04C01)

## ANNEX TO THE EUROPEAN SEARCH REPORT
## ON EUROPEAN PATENT APPLICATION NO.

EP 24 19 2437

This annex lists the patent family members relating to the patent documents cited in the above-mentioned European search report.
The members are as contained in the European Patent Office EDP file on
The European Patent Office is in no way liable for these particulars which are merely given for the purpose of information.

16-01-2025

| Patent document cited in search report | | Publication date | Patent family member(s) | Publication date |
|---|---|---|---|---|
| CN 1913332 | A | 14-02-2007 | NONE | |
| CN 107317526 | A | 03-11-2017 | NONE | |

EPO FORM P0459

For more details about this annex : see Official Journal of the European Patent Office, No. 12/82